# FASCICULE DE BREVET EUROPEEN

(11) **EP 2 614 386 B1**
(45) Date de publication et mention de la délivrance du brevet: **20.05.2015**
(21) Numéro de dépôt: 11754875.0
(22) Date de dépôt: 09.09.2011
(51) Int. Cl.: G01T 1/08

(54) **PROCEDE DE MESURE DE TRITIUM OU D'AUTRES RAYONNEMENTS POUR LE DEMANTELEMENT**
VERFAHREN ZUR MESSUNG VON TRITIUM ODER ANDERER STRAHLUNG FÜR DEMONTAGEVERFAHREN
METHOD FOR MEASURING TRITIUM OR OTHER RADIATION FOR DISMANTLING

(30) Priorité: 10.09.2010 FR 1057230
(43) Date de publication de la demande: 17.07.2013
(73) Titulaire: Commissariat à l'Énergie Atomique et aux Énergies Alternatives, 75015 Paris (FR)
(72) Inventeur: FICHET, Pascal, F-78300 Poissy (FR); GOUTELARD, Florence, F-91460 Marcoussis (FR); BRESSON, Fannie, F-92160 Antony (FR); LELACHE, Hubert, F-91400 Orsay (FR)
(74) Mandataire: Regimbeau
(86) Numéro de dépôt international: PCT/EP2011/065673
(87) Numéro de publication internationale: WO 2012/032168

(56) Documents cités:
- EP-A1- 0 316 686
- FR-A1- 2 128 055
- GB-A- 781 139
- JP-A- 3 041 386
- JP-A- 2007 192 548
- COE ET AL: "An evaluation of X-ray films suitable for autoradiography using <14>C beta-radiation", INTERNATIONAL JOURNAL OF APPLIED RADIATION AND ISOTOPS, PERGAMON PRESS, NEW YORK, NY, US, vol. 33, no. 7, 1 juillet 1982 (1982-07-01), pages 575-582, XP024626139, ISSN: 0020-708X, DOI: DOI:10.1016/0020-708X(82)90015-1 [extrait le 1982-07-01]
- 'Radiographic Film', [en ligne] 23 Août 2002, XP055114646 Extrait de l'Internet: <URL:https://web.archive.org/web/2002082302 0114/http://www.ndt-ed.org/EducationResourc es/CommunityCollege/Radiography/EquipmentMa terials/radiographicfilm.htm> [extrait le 2014-04-22]

## Description

### Domaine de l'invention

L'invention concerne le domaine de la détection de rayonnements radioactifs. Plus particulièrement, l'invention concerne la détection de rayonnement β⁻ pur sur des surfaces solides. Les émetteurs β⁻ pur sont des radionucléides dont le rayonnement β⁻ n'est pas accompagné de rayonnement X ou γ.

### Arrière plan technologique

Il est important de pouvoir détecter les rayonnements radioactifs sur un site nucléaire, notamment avant son démantèlement, afin de connaître les risques que les personnes présentes sur le site encourent et de leur fournir les protections adéquates.

Certains rayonnements sont plus faciles à détecter que d'autres. Pour ces rayonnements, tels que les types γ (gamma) et X, on dispose aujourd'hui d'outils adéquats pour connaître l'intensité de ces rayonnements de manière localisée.

Cependant, d'autres rayonnements sont plus difficiles à détecter parce que ceux-ci sont trop faibles, tels que ceux du type β⁻. Les rayonnements β⁻ sont émis par les noyaux d'atome, comprenant des neutrons et protons, présentant un excès de neutrons. À pression constante, un neutron du noyau peut se transformer en proton. Ceci s'accompagne de l'émission d'un électron, qui est une particule β⁻, et d'un antineutrino. Les rayonnements β⁻ sont qualifiés de moyennement pénétrant ; une feuille d'aluminium de quelques millimètres d'épaisseur suffit à arrêter les rayonnements β⁻, contrairement aux rayonnements γ et X qui sont qualifiés de très pénétrants.

Dans les sites nucléaires, les rayonnements β⁻ sont dus principalement au tritium ³H, isotope radioactif de l'hydrogène ¹H. Avant de procéder au démantèlement du site, on souhaite identifier les zones émettant des rayonnements β⁻, ce qui révèle la présence de tritium ³H qu'il faut dépolluer.

Aujourd'hui, afin de détecter les rayonnements β⁻ dus au tritium ³H sur une surface solide, on réalise des prélèvements, ce qui détruit la surface solide étudiée.

Par exemple, dans le document « Calculs et mesures de l'activation induite dans les bétons de protection d'un accélérateur d'ions de haute énergie », in Radioprotection 2000, vol. 35, n°3, pages 311 à 334, est décrit le démantèlement du synchrotron Saturne II, en fonctionnement de 1979 à 1997 à Saclay, France. Préalablement à la mesure, un carottage est réalisé dans le béton de la structure du synchrotron, puis la carotte prélevée est échantillonnée au diamant. Le tritium ³H est ensuite mesuré sur ces carottes par comptage grâce à un scintillateur liquide. La méthode de préparation des échantillons n'est pas connue de ce document.

Un inconvénient du procédé utilisé dans cet article est la nécessité de détruire la surface solide sur laquelle on souhaite effectuer des mesures de tritium ³H. Un autre inconvénient est la mesure très localisée du tritium ³H, et si une mesure sur un autre endroit est souhaitée, un autre carottage est nécessaire.

Un dispositif et un procédé pour la mesure du tritium ³H de manière non destructrice sont décrits dans le document JP 3-041 386. Le dispositif comprend une tête de connexion composée d'une extrémité d'un tuyau d'aspiration, d'éléments de chauffe et de ventouses de fixation pour la fixation à une surface solide. Le tuyau d'aspiration est connecté à un piège à froid, lui-même connecté à une pompe d'aspiration dotée d'un débitmètre.

Le procédé mis en oeuvre est le suivant : la tête de connexion est placée sur la surface solide, dans ce cas en béton. Les ventouses de fixation permettent de maintenir la tête de connexion en place. Les éléments chauffant chauffent à 200°C le béton sur la partie couverte par la tête de connexion faisant ainsi s'évaporer l'eau présente dans le béton. La pompe permet d'aspirer la vapeur d'eau s'échappant du béton. Lorsque la vapeur d'eau atteint le piège à froid, celle-ci se refroidit jusqu'à se condenser en eau liquide qui sera utilisée par la suite pour la mesure du tritium ³H contenu dans cette eau.

Un inconvénient du dispositif et du procédé de ce document est de permettre de discrétiser la surface solide seulement en fractions de la taille de la tête de connexion. Or, la taille de la tête de connexion doit être suffisamment grande pour permettre d'aspirer une quantité suffisante d'eau sous forme vapeur surtout que le béton n'en contient pas énormément. Cette technique suppose aussi que le tritium ³H est labile alors qu'il peut très bien être lié fortement au béton.

Un autre inconvénient est la nécessité de transporter des échantillons liquides potentiellement radioactifs.

Encore un inconvénient est la difficulté à robotiser la pose de la tête de connexion qui possède une forme spécifique.

Un autre procédé de détection de rayonnement β⁻ est décrit dans JP2007-192548.

### Présentation

Un objectif de l'invention est de palier au moins un inconvénient de l'état de la technique décrit ci-dessus à titre d'exemples.

Pour cela, l'invention propose un procédé selon la revendication 1.

### Présentation des dessins

D'autres objectifs, caractéristiques et avantages apparaîtront à la lecture de la description détaillée qui suit, en référence aux dessins donnés à titre illustratif et non limitatif, parmi lesquels :
- la figure 1 représente de manière schématisé un kit pour la détection de rayonnement β⁻ en place sur une surface solide ;
- la figure 2a illustre les étapes du procédé d'utilisation du kit de la figure 1 lorsqu'une gamme d'étalonnage est utilisée ;
- la figure 2b illustre les étapes du procédé d'utilisation du kit de la figure 1 lorsqu'un séparateur est utilisé ;
- la figure 3a est une reproduction d'un premier film révélé au laser après exposition aux rayonnements de la surface solide, le film étant celui le plus proche de la surface solide ;
- la figure 3b est une reproduction d'un deuxième film révélé au laser après exposition aux rayonnements de la surface solide, le film étant celui le plus éloigné de la surface solide ;
- la figure 4a illustre le marquage sur un film dû à une gamme d'étalonnage permettant la quantification des rayonnements β⁻ et donc de tritium ³H obtenue sur un film de même matériau que le premier film de la figure 1 ;
- la figure 4b est une reproduction d'un film révélé qui a été placé au dessus du film portant le marquage de la gamme d'étalonnage de la figure 4a.

### Description détaillée

### Kit de détection de rayonnements β⁻

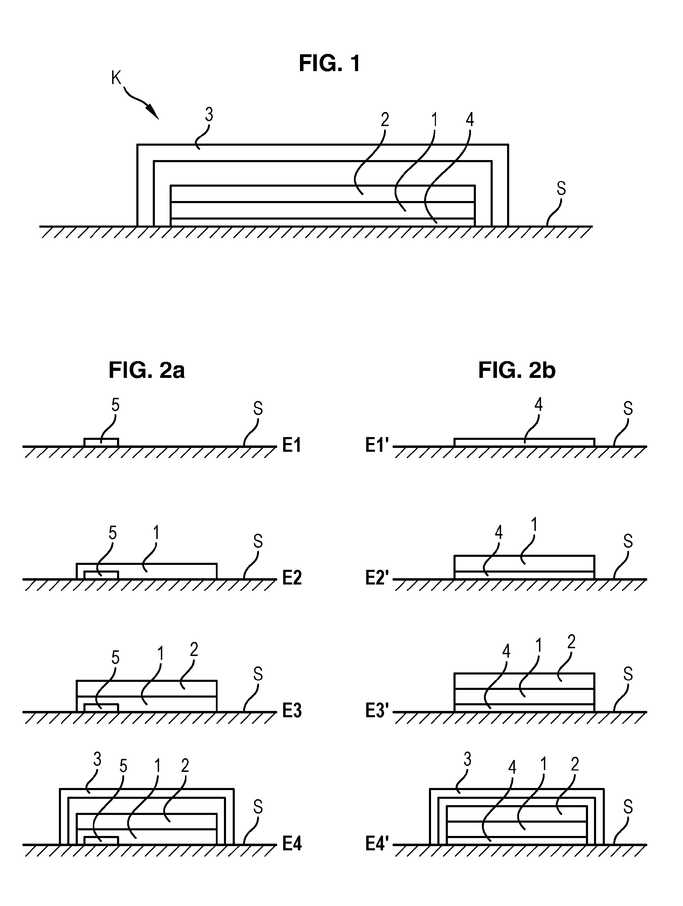

En référence à la **figure 1****,** un kit de détection de rayonnements β⁻est décrit ci-après. Ce kit **K** permet la détection, voire la mesure, des rayonnements β⁻ de manière non destructrice pour la surface solide **S**.

Le kit **K** comprend au moins deux films **1, 2** sensibles à au moins deux types de rayonnements distincts dont le type β⁻.

Par exemple, les deux films **1, 2** peuvent être identiques et sensibles aux rayonnements β⁻, γ, X voire également α.

Autre exemple, les deux films **1, 2** sont différents, l'un est sensible aux rayonnements β⁻ et l'autre aux rayonnements γ, voire également X mais pas aux rayonnements β⁻.

Le nombre de films du kit **K** varie selon le type de rayonnements que l'on souhaite détecter et/ou mesurer.

Les films **1, 2** sont avantageusement en polymère recouvert d'une couche de phosphore. Ces films ont typiquement une épaisseur de 1 mm. Ces films **1, 2,** une fois exposés aux rayonnements β⁻, γ, X, ou α peuvent facilement être réutilisés en les exposant à une lumière blanche homogène intense mais sans UV.

Le kit **K** peut comprendre en outre une protection **3** pour protéger les films **1, 2** des autres rayonnements environnant la surface solide **S** et notamment au rayonnement de la lumière du jour qui pourrait effacer les films. La protection **3** peut être une feuille de Polymère fine d'environ 450 µg/cm², un tissu noir ou encore un couvercle en un matériau non pénétrable par les rayonnements auxquelles sont sensibles les films **1, 2.** Dans le cas où la protection **3** est un couvercle, celui-ci peut être en plomb.

Les rayonnements β⁻ sont émis par les noyaux de divers atomes par exemple du tritium ³H et du carbone 14 ¹⁴C. Dans le cas où l'on s'intéresse uniquement au tritium ³H, il convient de ne détecter que les rayonnements β⁻ du tritium ³H. Les rayonnements β⁻ émis par le carbone 14 (¹⁴C) sont plus pénétrants que les rayonnements β⁻ émis par le tritium ³H. Mais les rayonnements β⁻ du carbone 14 ¹⁴C peuvent être séparés des rayonnements β⁻ du tritium ³H en utilisant un séparateur 4 constitué, par exemple, d'une feuille de papier entre la surface solide **S** et le premier film **1.** Dans ce cas on ne voit que le carbone 14 ¹⁴C sur la révélation du film. Le tritium ³H s'observe alors par différence entre deux enregistrements, l'un avec le séparateur et l'autre sans le séparateur.

Le kit **K** peut encore comprendre une gamme **5** d'étalonnage pour la quantification du tritium ³H. La gamme d'étalonnage **5** permet une quantification des rayonnements β⁻ et donc une quantification du tritium ³H.

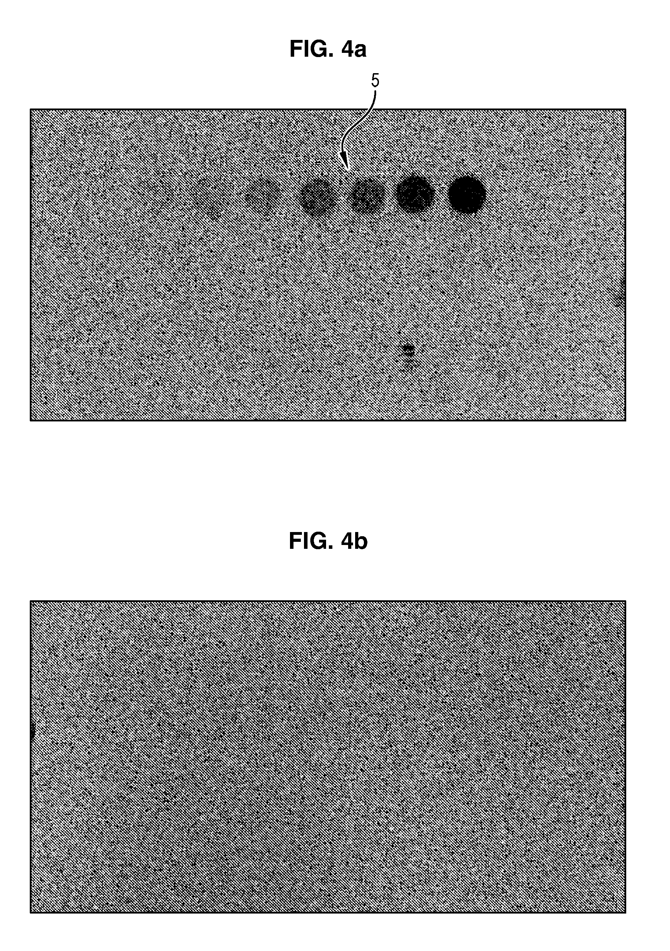

La gamme d'étalonnage **5** est une série de matrices diverses (par exemple polymère, béton, métaux, ...) comprenant du tritium ³H dans des concentrations différentes, par exemple de 1 kBq/g à la dizaine de kBq/g, formant ainsi un ensemble d'étalons. La gamme d'étalonnage **5** est à poser sur la surface solide **S** et sous les films 1, **2.** Les matrices sont choisies pour obtenir un bon contraste sur le film 1 (la taille de la matrice sur l'exemple de la figure 4a correspond à un cylindre de diamètre d'environ 1 cm et d'épaisseur d'environ 1 mm).

La gamme d'étalonnage impressionne les films **1, 2** de façon différente en fonction du temps d'exposition. Dans le cas d'une analyse quantitative, il faut que les films **1, 2** soient exposés pendant la même durée sur la gamme et les matériaux à analyser.

### Procédé d'utilisation du kit

En référence aux figures 2a et 2b est décrit ci-après un procédé d'utilisation du kit **K** décrit ci-dessus.

Tout d'abord, un premier film **1** est posé **E2, E2'** sur la surface solide **S** directement à son contact. Ce premier film **1** va être marqué par les rayonnements β⁻, γ, X et α et arrêter certains d'entre eux.

Ensuite, un deuxième film **2** est posé **E3, E3'** sur le premier film **1** directement à son contact. Certains rayonnements ont été arrêtés par le premier film **1,** donc le deuxième film **2** ne sera marqué que par les rayonnements qui ont traversé le premier film **1** et donc qui sont pénétrants.

D'autres films peuvent encore être posés à chaque fois par empilement sur la pile précédente et à son contact. Le nombre de films à utiliser dépend des rayonnements β⁻ que l'on souhaite détecter et/ou mesurer. En effet, tous les rayonnements β⁻ ne pénètrent pas à l'intérieur d'un matériau de la même manière et sur la même distance.

Les rayonnements β⁻ ne sont pas très pénétrants, dans la majorité des cas, ils sont arrêtés par le premier film **1** et ne marquent donc que celui-ci. Cependant, dans certains cas, les rayonnements β⁻ peuvent être plus pénétrants. Il faut alors utiliser au moins un film supplémentaire. Les rayonnements plus pénétrants comme γ ou X marquent tous les films.

On peut vérifier si les rayonnements détectés sur le deuxième film **2** ou si plusieurs films sont utilisés, le dernier sur le haut de la pile, sont des rayonnements autres que β⁻ en utilisant un détecteur électronique adéquat. Si le détecteur indique que les rayonnements qui ont marqué le deuxième film **2,** ou dans le cas où plusieurs films ont été utilisés le dernier film sur le haut de la pile, sont des rayonnements γ où X par exemple, alors il n'y a pas besoin d'ajouter un autre film. Dans le cas contraire, si le détecteur indique qu'il existe un endroit sur le deuxième film **2,** ou le cas échéant le dernier film sur le haut de la pile, qui ne soit pas marqué par des rayonnements γ ou X, par exemple, alors il faudra ajouter un film supplémentaire car la marque laissée est vraisemblablement due à des rayonnements β⁻plus pénétrants.

Afin d'éviter au maximum l'impression et/ou l'effacement des films par de la lumière parasite provenant de l'environnement autour de la surface solide **S,** on peut recouvrir **E4, E4'** les deux films **1, 2** ou la pile de films d'une protection **3,** par exemple un couvercle.

Les films **1, 2** sont laissés exposés aux rayonnements de la surface solide **S** pendant un temps déterminé, par exemple une à deux semaines dans le cas de contamination faible au tritium ³H. Le temps est déterminé expérimentalement pour optimiser le rapport signal sur fond et obtenir le meilleur contraste sur le film.

Au bout du temps d'exposition, les films **1, 2** sont collectés et révélé au laser à l'aide d'appareils adaptés.

Lors de la collecte des films **1, 2** et éventuellement leur transport, il faut prendre soin de ne pas les exposer à la lumière parasite ambiante pour éviter l'effacement de données enregistrées par les films **1, 2.**

Dans le cas où un séparateur **4** est utilisé figure 2b, celui-ci est placé **E1'** avant le premier film **1** directement en contact avec la surface solide **S.** Dans ce cas, le premier film **1** est alors en contact avec le séparateur **4.**

Si une gamme d'étalonnage **5** sous forme d'une série de matrices est utilisée (figure 2a) comprenant du tritium ³H dans des concentrations différentes, celle-ci doit être placée **E1** sous le premier film **1,** ou le cas échéant sous le séparateur **4.**

Un avantage de ce procédé est la simplicité des opérations successives à mettre en place et qui se résument à la superposition de films **1, 2** et éventuellement de séparateur **4,** de protection **3** et de gamme d'échantillonnage **5.** Par conséquence, la robotisation de ces opérations est simplifiée et le robot à développer n'est pas d'une grande complexité.

### Résultats obtenus avec le kit

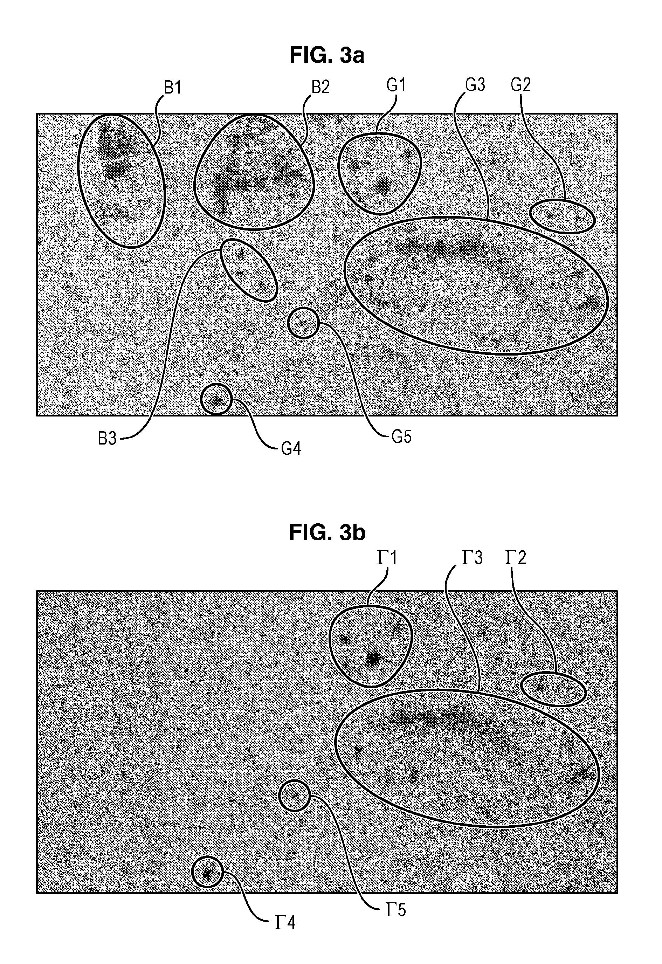

Les figures 3a et 3b reproduisent les marquages des premier (figure 3a) et deuxième (figure 3b) film **1** et **2** laissés par les rayonnements β⁻ et γ émis par une surface solide qui a été au contact avec du tritium ³H.

Sur la figure 3a, on remarque qu'il y a 8 zones marquées et référencées **B1** à **B3** et **G1** à **G5** sur le premier film **1.**

Sur la figure 3b, on remarque qu'il y a 5 zones marquées référencées **Γ1** à **Γ5** sur le deuxième film **2.**

En comparant les deux films **1** et **2,** on remarque que les zones **G1** à **G5** du premier film **1** correspondent aux zones **Γ1** à **Γ5** du deuxième film **2.** Ces cinq zones ont donc été marquées par des rayonnements γ plus pénétrant que les rayonnements β⁻ qui eux n'ont marqué que les zones **B1** à **B3** du premier film 1. C'est l'absence de marquage des zones correspondantes du deuxième film **2** qui renseigne sur le type β⁻ de ces rayonnements.

Les zones de la surface solide correspondant aux zones **B1** à **B3** ont alors été contaminées par du tritium ³H.

Cela démontre que la détection des rayonnements β⁻ (et indirectement des noyaux d'atomes responsables de ces rayonnements) est simplifié. De plus, cette détection donne des informations sur la contamination au tritium ³H en deux dimensions.

Afin de pouvoir mesurer quantitativement les rayonnements β⁻ (et par là le tritium ³H), une gamme d'étalonnage **5** est utilisée tel qu'illustré sur la figure 4a. On remarque que le marquage laissé par la gamme d'échantillonnage **5** est une succession de cercles plus ou moins intensément marqués (foncés). Plus le cercle se rapproche de la couleur du reste du film et plus la concentration en tritium ³H est faible. En comparant le résultat obtenu pour le premier film **1** à cette gamme **5,** il est possible de quantifier le tritium ³H.

La figure 4b montre un film posé en contact du film de la figure 4a. Ce film n'est pas marqué. Ce qui montre bien que les rayonnements β⁻ peuvent être caractérisés par l'empilement des deux films et sont présents à un endroit à la double condition que le premier film **1** soit marqué et que le deuxième film **2** ne soit pas marqué.

## Revendications

1. Procédé d'utilisation d'un kit (K) pour la détection de rayonnements β⁻provenant d'une surface solide (S) de manière non destructrice pour la surface solide (S), comprenant au moins deux films (1, 2) sensibles à au moins deux types de rayonnements distincts dont le type β⁻, **caractérisé en ce que** le procédé comprend les étapes suivantes :
- disposer (E2, E2') sur la surface solide un premier film (1) ou une superposition d'un nombre de films supérieur à deux ;
- disposer (E3, E3') sur le premier film ou la superposition de films un deuxième film (2) ;
- révéler les films ; et
- comparer le premier film (1) ou le film de la superposition de films positionné le plus près de la surface solide avec le deuxième film (2) après leur révélation,
dans lequel le nombre de film est déterminé de manière à ce que aucun rayonnement β⁻ n'atteigne le deuxième film.

2. Procédé selon la revendication 1, comprenant en outre l'étape suivante :
- recouvrir (E4, E4') les deux films (1,2) de la protection (3).

3. Procédé selon l'une des revendications 1 ou 2, dans lequel l'étape consistant à révéler les films (1,2) est effectuée au laser à l'aide d'appareils adaptés.

4. Procédé selon l'une des revendications précédentes, **caractérisé en ce que** le kit (K) comprend en plus une protection (3) pour protéger les films (1, 2) des rayonnements environnant la surface solide (S).

5. Procédé selon la revendication précédente, **caractérisé en ce que** la protection (3) du kit (K) est une feuille de film polymère.

6. Procédé selon la revendication 4, dans lequel la protection (3) est un tissu noir.

7. Procédé selon la revendication 4, dans lequel la protection (3) est un couvercle en un matériau non pénétrable par les rayonnements auxquelles sont sensibles les films.

8. Procédé selon la revendication 7, **caractérisé en ce que** le couvercle (3) est en plomb.

9. Procédé selon l'une des revendications précédentes, **caractérisé en ce que** le kit (K) comprend en outre une gamme d'étalonnage pour la quantification des rayonnements β⁻.

## Patentansprüche

1. Verfahren zur Verwendung eines Kit (K) zum Detektieren von β⁻-Strahlungen, die von einer Festkörperoberfläche (S) stammen, auf für die Festkörperoberfläche (S) nicht zerstörerische Weise, umfassend mindestens zwei Filme (1, 2), die gegenüber mindestens zwei verschiedenen Strahlungstypen, darunter der Typ β⁻, empfindlich sind, **dadurch gekennzeichnet, dass** das Verfahren die folgenden Schritte umfasst:
- Anordnen (E2, E2') eines ersten Films (1) auf der Festkörperoberfläche oder Übereinanderanordnen einer Anzahl von Filmen größer als zwei;
- Anordnen (E3, E3') eines zweiten Films (2) auf dem ersten Film oder auf der Übereinanderanordnung von Filmen;
- Entwickeln der Filme; und
- Vergleichen des ersten Films (1) oder des Films der Übereinanderanordnung von Filmen, welcher der Festkörperoberfläche am nächsten ist, mit dem zweiten Film (2) nach deren Entwicklung,
wobei die Anzahl von Filmen derart bestimmt ist, dass keine β⁻-Strahlung den zweiten Film erreicht.

2. Verfahren nach Anspruch 1, ferner umfassend den folgenden Schritt: Abdecken (E4, E4') der zwei Filme (1,2) mit einem Schutz (3).

3. Verfahren nach einem der Ansprüche 1 oder 2, bei dem der Schritt des Entwickelns der Filme (1, 2) mit Laser mit Hilfe von geeigneten Geräten durchgeführt wird.

4. Verfahren nach einem der vorhergehenden Ansprüche, **dadurch gekennzeichnet, dass** das Kit (K) ferner einen Schutz (3) umfasst, um die Filme (1, 2) vor den Strahlungen zu schützen, welche die Festkörperoberfläche (S) umgeben.

5. Verfahren nach dem vorhergehenden Anspruch, **dadurch gekennzeichnet, dass** der Schutz (3) des Kit (K) eine Polymerfilmlage ist.

6. Verfahren nach Anspruch 4, bei dem der Schutz (3) ein schwarzes Gewebe ist.

7. Verfahren nach Anspruch 4, bei dem der Schutz (3) ein Deckel aus einem Material ist, das von den Strahlungen, denen gegenüber die Filme empfindlich sind, undurchdringbar ist.

8. Verfahren nach Anspruch 7, **dadurch gekennzeichnet, dass** der Deckel (3) aus Blei ist.

9. Verfahren nach einem der vorhergehenden Ansprüche, **dadurch gekennzeichnet, dass** das Kit (K) ferner eine Kalibrierskala für die Quantifizierung der β⁻-Strahlungen umfasst.

## Claims

1. Method for using a kit (K) for the detection of β⁻radiations coming from a solid surface (S) in a way that is not destructive to the solid surface (S), comprising at least two films (1, 2) sensitive to at least two distinct types of radiation including the β⁻type, **characterised in that** the method comprises the following steps:
- disposing (E2, E2') on the solid surface a first film (1) or a superimposition of a number of films greater than two;
- disposing (E3, E3') a second film (2) on the first film or superimposition of films;
- developing the films; and
- comparing the first film (1) or the film in the superimposition of films positioned closest to the solid surface with the second film (2) after they are developed,
in which the number of films is determined so that no β⁻ radiation reaches the second film.

2. Method according to claim 1, further comprising the following step:
- covering (E4, E4') the two films (1, 2) with the protection (3).

3. Method according to one of claims 1 or 2, in which the step consisting of developing the films (1, 2) is carried out by laser using suitable apparatus.

4. Method according to one of the preceding claims, **characterised in that** the kit (K) comprises in addition a protection (3) for protecting the films (1, 2) from the radiations surrounding the solid surface (8).

5. Method according to the preceding claim, **characterised in that** the protection (3) is a sheet of polymer film.

6. Method according to claim 4, in which the protection (3) is a black fabric.

7. Method according to claim 4, in which the protection (3) is a cover made from a material that cannot be penetrated by the radiations to which the films are sensitive.

8. Method according to claim 7, **characterised in that** the cover (3) is made from lead.

9. Method according to one of the preceding claims, **characterised in that** the kit (K) comprises in addition a scale calibrated for quantifying β⁻ radiations.
